# EUROPEAN PATENT APPLICATION

(11) **EP 1 099 947 A2**
(43) Date of publication of application: **16.05.2001**
(21) Application number: 00203957.6
(22) Date of filing: 10.11.2000
(51) Int. Cl.: G01M 17/02

(54) **Apparatus and method for performing optical tyre testing**

(30) Priority: 12.11.1999 US 438966
(71) Applicant: Laser Technology Inc., Norristown, PA 19403 (US)
(72) Inventor: Newman, John W., Norristown, Pennsylvania 19403 (US)
(74) Representative: Dunleavy, Kevin James

(57) **Abstract**

Two laterally-displaced images of a test object interfere with each other to form a shearogram. Two shearograms, taken while the object is unstressed and stressed, respectively, are compared electronically to yield a composite interference pattern. According to the invention, each shearogram is formed by the interference of pairs of distinct rays of coherent light, reflected from different points on the object. The first ray of each pair is reflected from the object, strikes a mirror spaced from the object, and is reflected from the mirror. At the same time, the second ray of each pair is reflected from the object and strikes a beam splitter that is constructed as a partially silvered mirror. The beam splitter directs a portion of the second ray in the same direction as the reflected first ray, and a portion of the first ray passes through the beam splitter without being reflected. Since the two rays have the same polarization angle, and are mutually parallel, the rays interfere. A detector is positioned to receive light from the beam splitter. The detector observes the interference between pairs of rays over the entire field of view, and the result is an interference pattern, i.e. a shearogram, formed from the optical interference of the two laterally-displaced images of the object. The amount of shearing can be controlled by varying the angle of the mirror. Subsequent computer processing can be used to compare the shearograms electronically. Such processing can include the averaging of several shearograms, taken sequentially, with different phase shifts induced by linearly moving the mirror.

## Description

### BACKGROUND OF THE INVENTION

### 1. Field of the Invention

This invention relates to the field of nondestructive testing of articles such as tires. In particular, the invention relates to electronic shearography, which produces interference patterns generated by laterally-displaced images of an object.

### 2. Description of the Related Technology

Tire testing with laser based technologies such as holography and shearography is well known and is an established technique for finding critical separation type flaws in tires. Developed in the 1970's, holographic tire testing became the standard for testing tires for critical applications such as aircraft, race cars and truck tires. These machines required film cameras to record the extremely fine detail in the laser light interference fringe pattern that makes up the hologram. Sensitive to flaws, these machines required skilled operators and vibration isolation systems to insulate the optical elements and the tire from any motion greater than ¼ of the wavelength of the laser light during the film exposure. The holography camera was located inside a dome which created a test cell into which the tire was placed. A vacuum blower or vacuum accumulator connected by valves allowed the machine controller to cycle the pressure inside the test cell from ambient pressure to a reduced vacuum level and back to ambient. The heavy steel construction and vibration isolation system reduced vibration and movement of the components sufficiently to obtain holograms of the tire subject to different vacuum loads.

Separation flaws in tires, which typically contain a small quantity of entrapped air, create a small increase in strain in the surrounding rubber. This strain, or out-of-plane deformation, is recorded in the double exposure hologram as a series of concentric fringe lines caused by the constructive/destructive interference of the laser light. The fringe patterns are lines of equal displacement similar to contour lines on a geodetic survey map however for a tire, the hologram shows how the tire changes shape on a microscopic level as a result of the vacuum load. Using film holography tire testers, tire quality improved substantially reducing the number of failures and resulting accidents and loss of life and property.

Holography, while sensitive to the flaws also yielded an image that was drastically more complicated to interpret as a results of fringe lines caused by tire motion and thermal expansion and contraction of the rubber due to temperature changes and other causes. Even handling the tires induces stresses in the rubber that caused motions. The machines often have to wait until the tire stops creeping or relaxes so the hologram can be made.

The invention of shearography by Hung and Grant in 1975 improved the situation. Shearography is a film based optical technique similar to holography but instead of yielding a fringe pattern showing how the tire changes shape, shearography shows the first derivative of the change in shape. Fringe patterns due to temperature and tire creep were eliminated and only the double bulls eye pattern around the separation flaws remains. Interpretation is far easier and the system is much less sensitive to vibration and other motion problems.

Film holography and shearography yield the best image quality due to the extraordinary high resolution of photographic film, however they are slow, require chemical processing of the film and several tires have to be tested before the film is removed from the camera, processed and interpreted. If the hologram quality is poor due to motion, vibration or other factors, the tires must be retested. Reading the images is cumbersome and obtaining precision measurements of flaw size is subjective at best. This is a major problem since separation type flaws in the tire can cause catastrophic failure if they are larger than a certain size, or remain benign if smaller than that size. The operator must be equipped with a means for precision defect measurement.

Since the mid-1980's, with the development of computers and digital video cameras, or CCD, electronic holography and electronic shearography camera systems have been introduced. Electronic shearography was first used in a tire tester employing a birefringent shearography optical element based on Hung 4,887,899. This patent teaches the use of a birefringent optical element and a polarizer to create two laterally sheared (offset) interfering images of an area of the tire and directs these images into a coaxial path and into the CCD video camera. As in the film tire tester, the unmounted tire is placed into a chamber or dome structure, which both supports the tire without mechanical distortion and allows the air pressure within the dome to be reduced. Air containing separations within the tire are detected when the tire is subjected to a reduced atmospheric pressure, increasing the relative pressure inside the separation stresses the rubber material above the tire. The rubber tire material above the separation is forced outward from the inside surface of the tire (or outside surface if on the sidewall area of the tire) towards the shearography camera. The shearography camera(s) operate by recording the interferometric image of the tire at an initial pressure state and comparing the image to that of the tire at a reduced pressure. The comparison technique may be any of a number of digital or analog image processing techniques well known in the literature including image subtraction, absolute differences, square root of the some of the squares or others in order to obtain an image showing the derivatives of the out of plane displacement. The CCD based shearography camera makes 30 video images per second allowing a continuous real-time video image to the tire showing how the tire is deforming. Techniques such as image integration and defect depth detection are well known and established techniques. A new design feature allowed by the use of small lasers or fiber optic laser beam delivery techniques is to move the camera instead of the tire. The lower mass of the camera and support mechanism has a shorter vibration damp time than the mass of a rotation tire and it's support mechanism. This increases the overall speed of the tire tester and economic benefit by having a greater throughput.

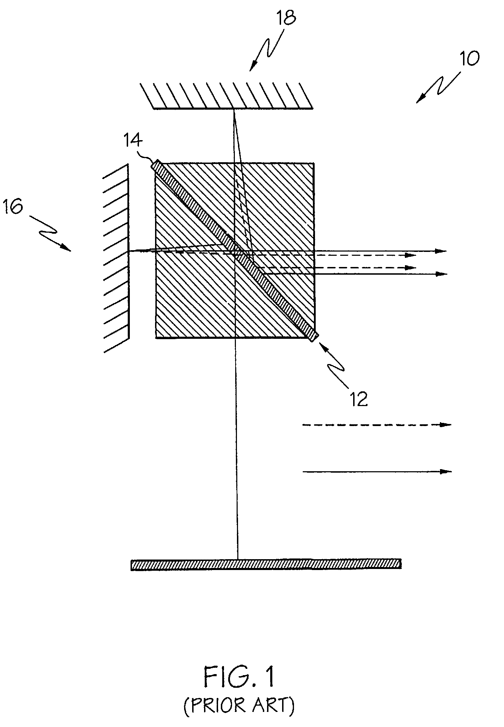

As effective as the birefringent shearography optical system is, the amount of the image shear is fixed during the manufacturing of the Wollastan prism. While is can be rotated to make the interferometer sensitive in different vector directions, the shear angle is fixed. The Newman, Tyson 5,094,528 patent teaches the use of a shearography optical system using a cube type beam splitter and various mirrors to obtain an fully adjustable sheared image, however this technique has two drawbacks: the beam splitter cube, to bonded right angle prisms, are very heavy and suffer from loss of resolution due to internal reflections. This phenomenon is depicted in FIGURE 1, which depicts a prior art system 10 of the type that is disclosed in U.S. Patent 5,094,528, including a cube beam splitter 12 having an interface surface 14, and a pair of reflecting mirrors 16, 18. The light paths that define the desired image is represented in FIGURE 1 as solid lines, while the light paths followed by the unwanted internal reflections are depicted as broken lines. As is evident from FIGURE 1, the presence of the unwanted internal reflections can seriously degrade the resolution of the image that is received by the camera. The resolution loss places a lower limit on tire defect size sensitivity and detection reliability than can be reliably found.

Weight is a problem if the camera is mounted on a robotic arm or, in the case of a tire tester, a camera rotation and tilt mechanism. A need exists for an improved apparatus and method for performing electronic shearography that is lighter in weight and of higher resolution than systems and methods heretofore known.

### SUMMARY OF THE INVENTION

Accordingly, it is an object of the invention to provide an improved apparatus and method for performing electronic shearography that is lighter in weight and of higher resolution than systems and methods heretofore known.

In order to achieve the above and other objects of the invention, an apparatus for the nondestructive testing of a tire includes, according to a first aspect of the invention, a source of coherent light directed onto a portion of a tire being tested; a beam splitter located sufficiently near the portion of the tire being tested so that the beam splitter can receive light reflected from the portion of the tire being tested, the beam splitter comprising a partially silvered surface that is capable of transmitting a first portion of a light ray incident thereon, and reflecting a second portion of the incident light ray; and analyzing structure for comparatively analyzing the first and second portions of light from the beam splitter to produce a shearography image.

These and various other advantages and features of novelty that characterize the invention are pointed out with particularity in the claims annexed hereto and forming a part hereof. However, for a better understanding of the invention, its advantages, and the objects obtained by its use, reference should be made to the drawings which form a further part hereof, and to the accompanying descriptive matter, in which there is illustrated and described a preferred embodiment of the invention.

### BRIEF DESCRIPTION OF THE DRAWINGS

These features, aspects and advantages of the present invention will become better understood with regard to the following description, appended claims and accompanying figures where:
FIGURE 1 is a schematic diagram illustrating a prior art apparatus for performing shearography;
FIGURE 2 is a schematic diagram depicting optical components of a shearography apparatus according to a first embodiment of the invention;
FIGURE 3 is a schematic depiction of the optical components of the embodiment of FIGURE 1, and showing an approximate determination of the intensity of the interference pattern at the detector;
FIGURE 4 is a schematic diagram depicting optical components of a shearography apparatus according to a second embodiment of the invention;
FIGURE 5 is a schematic diagram showing optical components of another alternative embodiment of the invention, in which there are two mirrors disposed near adjacent sides of a beam splitter;
FIGURE 6 is a diagrammatical cross-sectional view of the mechanical elements of the preferred embodiment of the invention, shown in a first operative position;
FIGURE 7 is a diagrammatical cross-sectional view of the mechanical elements of the preferred embodiment of the invention, shown in a second operative position; and
FIGURE 8 is a fragmentary view of a portion of the structure shown in FIGURES 6 and 7, depicting performance of shearography tests on a tire according to the preferred method of the invention.

### DETAILED DESCRIPTION OF THE PREFERRED EMBODIMENT(S)

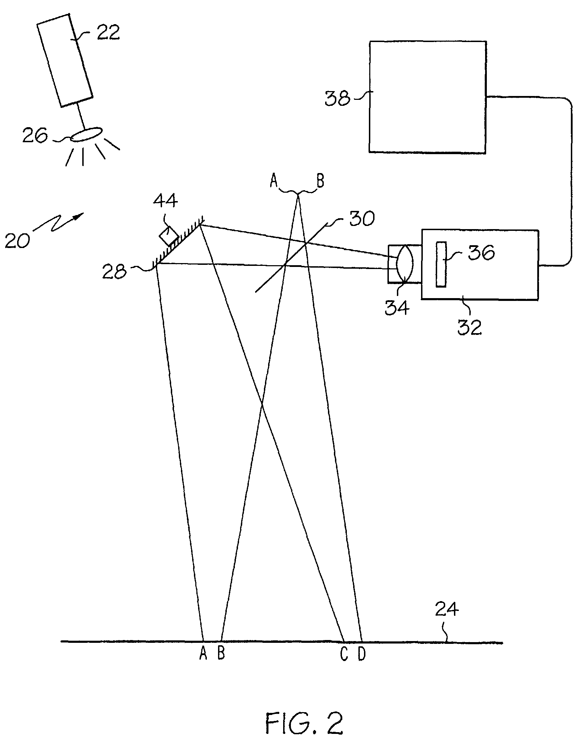

Referring now to the drawings, wherein like reference numerals designate corresponding structure throughout the views, and referring in particular to FIGURE 2, an apparatus 20 according to a first preferred embodiment of the invention includes a laser 22 that is constructed and arranged to direct coherent or monochromatic light onto the surface 24 of a test object, which in the preferred embodiment is a tire, although the invention has applicability to a number of other fields for which shearography might have utility, as will be discussed in greater detail below. A beam expander 26 causes the light beam from laser 22 to diverge in the direction of the object to be tested. A mirror 28 and beam splitter 30 are positioned near the object, so as to receive light reflected therefrom. A detector 32 is positioned near the beam splitter, as shown. The detector 32 is preferably a video camera that includes a large number of charge-coupled devices or CCDs, but it can be any device which is capable of detecting an image, virtually instantaneously, for subsequent digital processing. The detector includes lens 34 and a photosensitive screen 36. Images are focused onto the screen by the lens 34. Detector 32 is connected to a computer 38 which stores the images formed on the screen 36, and processes the stored images digitally in any one of a number of different ways, several of the preferred of which are discussed in greater detail below.

FIGURE 2 shows how the apparatus 20 performs shearography. Consider the light reflected from two nearby points on the surface 24 of the object, the points being labeled A and B. The reflected ray from point A strikes mirror 28, and is reflected by the mirror, and is directed towards beam splitter 30. One portion of the ray reflected from the mirror is transmitted through the beam splitter, towards detector 32, and the other portion, labeled A', is reflected, as indicated by the dotted line.

According to one important aspect of the invention, the beam splitter 30 is embodied as a partially silvered surface or mirror that is capable of transmitting a first portion of a light ray incident thereon, and reflecting a second portion of the incident light ray. In the preferred embodiment, the surface or mirror is silvered to the extent that it permits about fifty percent of the light incident thereon to be transmitted, with the remaining about fifty percent being reflected.

The reflected ray from point B strikes beam splitter 30. One portion of that ray is reflected from the beam splitter 30, and the remainder, labeled B', is transmitted through the beam splitter 30, also indicated by a dotted line. The rays illustrated by the dotted lines (A' and B') are not of concern here. The reflected ray is reflected in a direction which coincides with that of the ray originating from point A. Thus, the reflected rays from points A and B are directed into the same path. Because both rays have been reflected exactly once, after being reflected from the object itself, both rays will have the same angle of polarization. Since their polarization angle is the same, and the wavefronts are parallel, these rays interfere with each other to the maximum extent possible. The interfering rays pass through lens 34 which focuses the rays onto screen 36.

If the interfering rays did not have the same angle of polarization, they would interfere only partially. Partial interference reduces the signal-to-noise ratio, as the components of the rays which do not interfere would add to the background signal, causing loss of sensitivity. It is absolutely necessary that the rays have polarization angles which are not mutually orthogonal; otherwise, the rays would not interfere at all. It is preferable that the polarization angles be equal, to maximize the signal-to-noise ratio.

A similar analysis applies in the case of rays reflected from points C and D. FIGURE 2 therefore shows that the detector 32 can observe a wide range of points on the object, and is not limited to only a small area.

From FIGURE 2 and the above description, it follows that the image at each point on the detector screen 36 comprises the superposition of two light rays reflected from two distinct points on the object. Therefore, what is observed at the detector 32 is an interference pattern equivalent to the superposition of two laterally-displaced ("sheared") images of the object. In other words, the apparatus of FIGURE 2 generates a shearogram, and it does so with a beam splitter that is relatively lightweight and has a high degree of resolution in comparison with a prismatic beam splitter of the type that is described in U.S. Patent 5,094,528.

In the embodiment of FIGURE 2, the overall amount of light entering the camera or detector 32 is maximized, which is very important for low cost tire testers used in truck tire retreading where the laser is a major expense item. This first embodiment is used for lower cost machines for the truck tire industry. The disadvantage of this embodiment with respect to the other embodiments described below is that the parallax caused by the having two image apertures separated by a several inches causes a slightly distorted image and requires a laser with a relatively long coherent length (at least equal to the separation of the two imaging apertures).

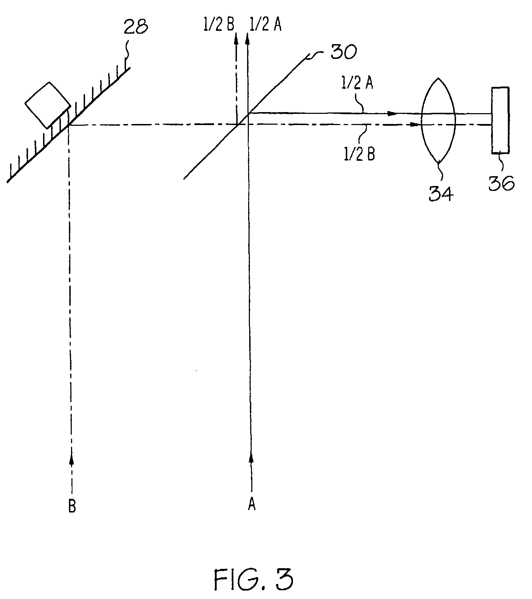

Another advantage of the present invention is that it makes efficient use of the radiation reflected from the object. This point is more clearly illustrated in FIGURE 3. For the sake of simplicity, FIGURE 3 shows only two rays, labeled A and B, reflected from the object (not shown in FIGURE 3). Also, the source of coherent radiation is omitted from FIGURE 3. In FIGURE 3, ray A enters beam splitter 30. Approximately one half of ray A is transmitted and the other half is reflected. The reflected ray travels towards lens 34, which focuses the ray onto screen 36. At the same time, ray B is reflected from mirror 28, onto the beam splitter. Approximately one half of ray B is reflected by the beam splitter 30, and the other half is transmitted through the beam splitter 30, towards lens 34, and eventually onto screen 36. Thus, the intensity of the radiation received at the screen 36 can be represented as 0.5A+0.5B. Since A and B are approximately equal (both rays originate from the same source, and are reflected from the same object), it follows that the intensity observed at a point on the screen, due to the interference of two rays, is approximately equal to the intensity of one of the rays reflected from the object. Thus, the amplitude at the detector is of comparable magnitude to the amplitude of the light reflected from the object. The above-described feature contrasts with some of the shearography systems of the prior art, wherein the optical elements inherently cause substantial attenuation of the light reflected from the object. By reducing the attenuation, one reduces the power requirements of the laser. One requirement of the above-described embodiments of the present invention is that the laser have a relatively long coherent length. In general, the difference between the path lengths of the reflected beams must be no greater than the coherent length of the laser, i.e. the length beyond which the laser beam ceases to be coherent.

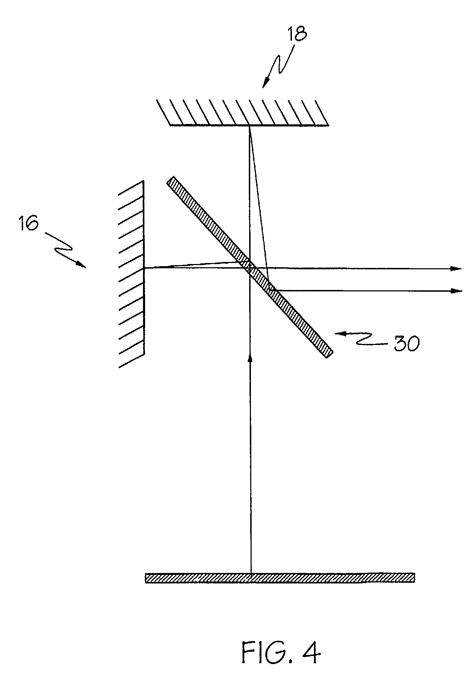

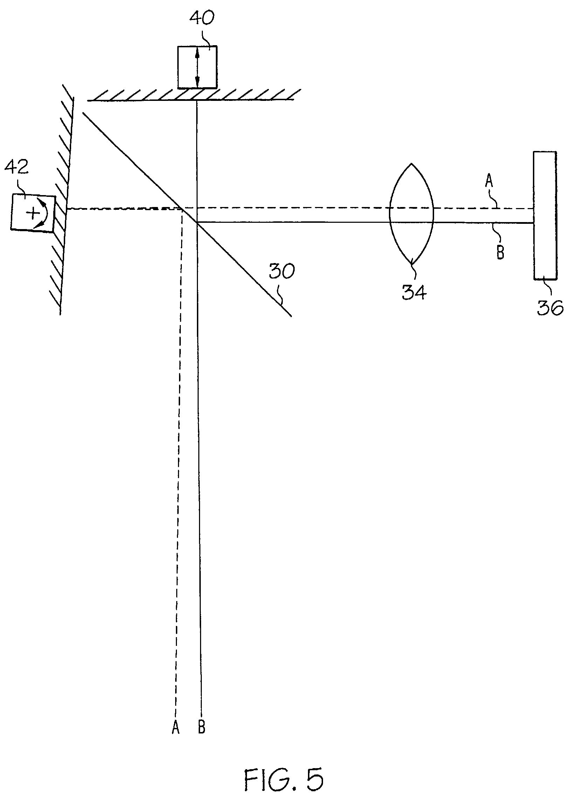

FIGURE 4 and 5 depict two additional embodiments of the invention. The first, as shown in FIGURE 4, is the standard Michelson Type interferometer, offering complete adjustability of the shear amount and direction (shear vector) using the partially silvered mirror beam splitter 30. The second, which is shown in FIGURE 5, is constructed and arranged so that one of the mirrors can be translated in steps to gather three or four shearography images where each image has one leg of the interferometer phase shifted. In the embodiment of FIGURE 5, there are two mirrors 40 and 42. Mirror 40 is linearly movable, as indicated by the arrows. Mirror 42 is rotatable, also as indicated by arrows. Beam splitter 30, lens 34, and screen 36 are similar to the corresponding components of the other embodiments. FIGURE 5 shows rays A and B, which originate from nearby points on the object. (For purposes of simplicity, neither the laser nor the object is shown in FIGURE 5.) A portion of ray A is reflected from the beam splitter 30, and onto mirror 42. A portion of the reflected ray then passes through the beam splitter, towards the lens and screen. At the same time, a portion of ray B passes through the beam splitter 30, and is reflected from mirror 40. A portion of the reflected ray is reflected from the beam splitter 30, towards the lens and screen. Thus, the arrangement of FIGURE 5 generates a shearogram. Note that FIGURE 5 does not show the portions of the rays that are lost due to the beam splitter.

In the embodiment of FIGURE 5, linear displacement of mirror 40 causes phase shifts, so that the apparatus of FIGURE 4 can be used to practice the method, described above, wherein shearograms are taken at different phase angles. Rotation of mirror 42 changes the angle of shear, i.e. the amount of separation of the laterally-displaced images. As mentioned above, varying the amount of shear varies the sensitivity of measurement. Note that the embodiment of FIGURE 5 can be used even where the mirrors are not moved or rotated. Also, it is possible to make mirror 40 rotatable and mirror 42 linearly movable. It is also possible to make both mirrors linearly movable or to make them both rotatable. All of these alternatives are within the scope of the invention.

The advantage of the embodiment of FIGURE 5, whether or not the mirrors are movable or rotatable, is that the path lengths of the rays originating from points A and B are the same, or almost the same. Therefore, the coherent length requirement of the laser is substantially reduced, as compared with the other embodiments. These multiple images may be used to generate a phase map image of a tire 48 (or any object being tested). This phase stepping technique is applicable to tire testers where maximum sensitivity to small defects is required. Phase stepping techniques are well established in the optical testing industry and would be known to those having ordinary skill in this industry. The phase stepping embodiment can be overly sensitive if used where large separations are common.

While the invention has been described with respect to the embodiments discussed above, the invention can be modified in many ways. The particular means of analyzing the shearograms generated by the apparatus of the invention can be varied. It is also possible to vary the order in which shearograms for stressed and unstressed conditions of the object are taken. Additional mirrors can be added, to direct the interfering beams to the detector, if it is necessary to change the position of the detector, subject to the requirement that the total path length of the beams be less than the coherent length of the laser.

As discussed above, it is possible to make some or all of the mirrors of the apparatus adjustable, either by rotation or linear displacement, or both. Except for the coherent length requirement, the invention is not limited by the type of laser used, or by the particular structure of the beam splitter. The invention can be used to test virtually any kind of opaque or translucent object. The invention is not limited to a particular type of detector, and could even be used with a film-based system, if desired. The above modifications, and other similar variations, should be deemed within the spirit and scope of the following claims.

The images formed in the detector 32 are stored and processed by computer 38, or its equivalent. The processing steps can be essentially the same as those described in U.S. Pat. No. 4,887,899. As in the above-cited patent, shearograms can be taken while the object is in an unstressed condition, and while the object is stressed. Stressing the object at, say, point A, changes the effective path length of the beam reflected from point A, thus changing the phase angle between the rays reflected from points A and B. This change perturbs the interference pattern, and the change can be observed by comparing the two patterns. Note that the shearograms can also be taken while the object is at two different conditions of stress, and is not limited to the special case in which the object is unstressed initially. It is therefore understood, throughout this specification, that wherever it is stated that shearograms are taken with the object in the "stressed" and "unstressed" conditions, the same could be done while the object is subjected to two distinct levels of stress.

Another useful procedure, described above with respect to U.S. Pat. No. 4,887,899, is to store the shearogram formed while the object is unstressed, and then to form and store shearograms repeatedly, in real time, as the object is stressed. The computer 38 is programmed to compare electronically the original shearogram (representing the unstressed condition) with the shearogram taken at a given instant, and to display the instantaneous results of the comparison on a video screen. Thus, the apparatus can display a "real time" image representing the current state of the object. Two major advantages of the present invention arise from its ability to adjust the position of the mirror both rotationally and linearly. Changing the amount of shearing can be done simply by rotating mirror 28 slightly. In FIGURE 2, mirror adjuster 44 can be used to vary the position of the mirror. It is understood that adjuster 44, as shown in the figure, represents any device or devices capable of causing linear and/or rotational movements of the mirror. Rotational movements cause variations in the amount of shearing; linear movements vary the path length of the light ray reflected from the mirror, and are useful in the technique described below. The mirror adjuster can be a motor, a piezoelectric crystal, or any other device capable of causing large or small movements. Rotation of the mirror changes the set of points "A" which give rise to light which interferes with light from points "B". This is equivalent to saying that the relative displacement of the sheared images is varied. Note that the amount of shearing can thus be continuously varied. The ability to vary the linear position of mirror 28 can also be exploited in the following method of analyzing interference patterns. The following method reduces "noise" in the final pattern, due to laser speckle. A piezoelectric crystal, or equivalent device, is used to move the mirror linearly, shifting the phase of the light from set of points "A". Each movement of the mirror is extremely small, i.e. a fraction of a wavelength. In one example, the mirror is "stepped" through four discrete positions, representing changes in the path length of one-quarter wave length. A shearogram is obtained for the first position, and is stored electronically. Then, a shearogram is obtained for each of the four quarter-wave positions while the object is stressed. Thus, four shearograms are taken for each of the four linear positions of the mirror, each shearogram being stored as before. Then, each phase-shifted shearogram is compared with the initial shearogram. That is, the shearogram taken in the first position, while the object is deformed, is compared with the stored shearogram taken while the object is undeformed. The same is done for each of the other mirror positions. Finally, the four composite patterns are averaged, or otherwise compared, or image processed, to obtain a final pattern. The final pattern has reduced speckle "noise". The method used to compare the shearograms taken for each given phase angle can simply be the subtraction of one pattern from the other, or it can be any of the other methods described in U.S. Pat. No. 4,887,899, or other methods.

In the above-described method, the number of times the mirror is "stepped" can be varied. In general, the greater the number of "steps", the greater the sensitivity of the method, and the longer the time required to perform the analysis. In the above-described method, a piezoelectric crystal is preferred because it enables one to move the mirror by very small distances, of the order of a fraction of a wavelength, in a controlled manner, according to a voltage applied to the crystal. Piezoelectric crystals have been used, in other fields, for producing small controlled movements of objects, and such devices are therefore commercially available. However, the above-described method is not limited to the use of a piezoelectric crystal.

A primary use for the invention is the nondestructive testing of tires for internal separation defects. Any of the three embodiments of the optical system can be used, each having advantages and disadvantages. However, the use of the invention enhances the performance of an electronic shearographic tire tester by reducing the weight of the camera and eliminating internal reflections in the commonly used glass beam splitter cube and the resulting loss of image resolution.

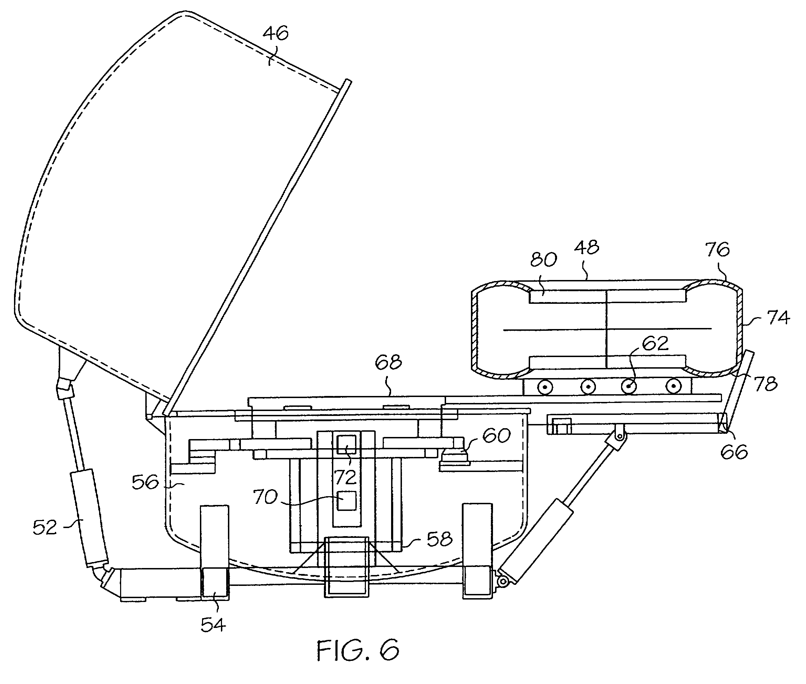

Referring now to FIGURE 6, which is a schematic drawing of the preferred embodiment of the invention used for the inspection of tires, the laser 22 that is shown in FIGURE 2 is built into a housing 46 which also contains the shearography apparatus 20 shown in FIGURE 2, including the partially silvered mirror 30, the fully reflective mirror 28, the detector 32 including a CCD video camera, the lens 34 and the imaging CCD chip 36.

The tire 48 must be subjected to a partial vacuum load by placing it inside a split pressure vessel 50 capable of opening to receive the tire by the action of pneumatic cylinder 52, which is connected to frame 54. The pressure vessel 50 consists of two fiberglass domes, an upper dome 46 and a lower dome 56. Inside lower dome 56 is an internal support frame 58, mounted on pneumatic vibration isolators 60. There can be any number of pneumatic isolators 60 as is sufficient to support the weight of frame 58, tire cart 62 and the weight of the tire 48 to be tested. Typically, three isolators 60 are used so distortions of the fiberglass lower dome 56 caused by the force of the differential pressure inside and outside the dome do not cause distortion of the inner frame 58.

Shearography tire testing is accomplished by imaging the submicroscopic deformation of the tire caused by the presence of air containing separations, blisters or bonding defects when the tire is subjected to a reduced atmospheric pressure. Therefore, proper handling of the tire while loading into the machine is important. If stresses are put on the tire, the rubber will keep moving for some time, creep, and disrupt the shearographic process. The preferred embodiment of the invention minimizes such stresses on the tire by use of a tilt table tire feeder 64 that permits tire 48 to be rolled onto the frame of a tilt table 66. The tire 48 is leaned over onto tire cart 62. The operator presses a button which opens a solenoid valve allowing air pressure to activate an air cylinder pushing the table up to the horizontal position. The tire cart 62 is then rolled by the operator into the machine and onto tracks 68 that mounted on inner frame 58. The shearography cameras 70 and 72 are mounted on a vertical lift mechanism built into the inner frame and placed into their lower position for loading and unloading the tire. The camera lift mechanism can be designed to be rotated in steps around the tire 48, allow sequential testing section by section with the tire 48 stationary, or the tire 48 can be rotated and stopped for section by section testing. Have a lower moment of inertia than the tire 48, tire cart and chain required to rotate the tire 48, rotation the cameras and camera lift mechanism is the preferred but not only embodiment.

When the tire 48 is in the test position, the dome 46 is closed and the operator enters the tire type/size. Other test parameters such as vacuum level, tire diameter and width are also entered. If the apparatus is fitted with bead cameras, the operator can select bead to bead inspection by crown and one bead followed by a tire flip operation. Most race tires may be inspected bead to bead from the inside due to the wide section width. Pressing a TEST button starts the test sequence. The controller positions the camera to the proper elevation for the test tire and begins the test. The tester automatically evacuates the chamber to the proper test pressure, captures the image, rotates to the next shot and repeats the sequence. Each image is displayed live and at the end of the sequence; a composite of all images is displayed for operator interpretation. Images can be stored onto optical disk or a print can be made if the system has the optional video printer. When the test sequence is completed with the images displayed on the monitor, the system automatically does the necessary housekeeping of setting the laser interlocks, lowering the bottom camera into the load/unload position. Pressing a button or set up for automatic opening as part of the test may open the dome. The operator has the option of stopping the test at any point.

The combined tire rotation and camera manipulation motion control is programmed for every tire using a simple teach/learn database. This completely eliminates mechanical adjustments during change over from one tire size to another, allowing random tires sizes to be tested as fast as though they were all one size (assuming an equal number of images per tire at the same vacuum level). The tire support frame is shock/vibration isolated from the chamber to eliminate normal factory environmental effects. The bottom camera assembly is in a normally retracted position for tire loading and unloading. When the test is started, the camera/laser assembly is elevated to the test position under computer control. The system has identical upper and lower camera/laser assemblies. As the tire 48 is rotated is steps under computer control, they inspect the entire tire bead to bead in a single setup. The upper camera laser assembly is adjustable to inspect the full range of the upper bead and sidewall. The lower camera assembly telescopes upward to inspect the entire inner crown area. The exact height of the camera is a function of the tire size and is controlled by the processor through the computer database of tire data. The lower bead area is tested with the lower camera/laser assembly in a lowered position or by flipping the tire to obtain full bead to bead coverage. All test sequences and camera positions controlled by the computer from the teach/learn tire database.

Key areas of the tire 48 that are preferably inspected according to the invention include the crown area 74, the shoulders 76 and 78 as well as the beads and turn-up-ply areas 80 on both side walls of the tire 48. This can be accomplished with two cameras covering the tire 48 in two rotations, or passes around the tire.

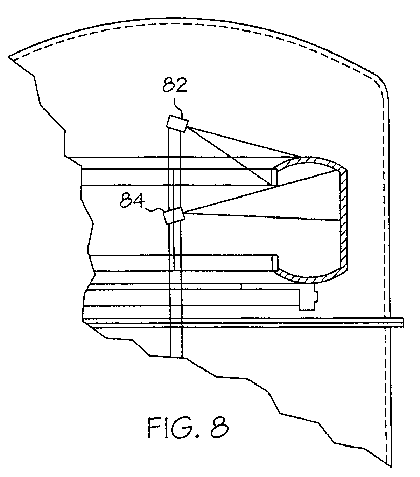

FIGURE 8 shows the raised position of two shearography cameras 82, 84, one viewing the top bead side wall area, the other viewing the top inside shoulder area down to the crown of the tire. The tire or the cameras can be rotated in steps around the tire testing section by section. The cameras are then lowered so that the top camera views the inside lower shoulder and the bottom camera views the lower bead area. The cameras then drop below the tire to extract the tire from the machine. A single camera system for crown areas only, or one camera covering all four band passes around the tire can be built using this invention.

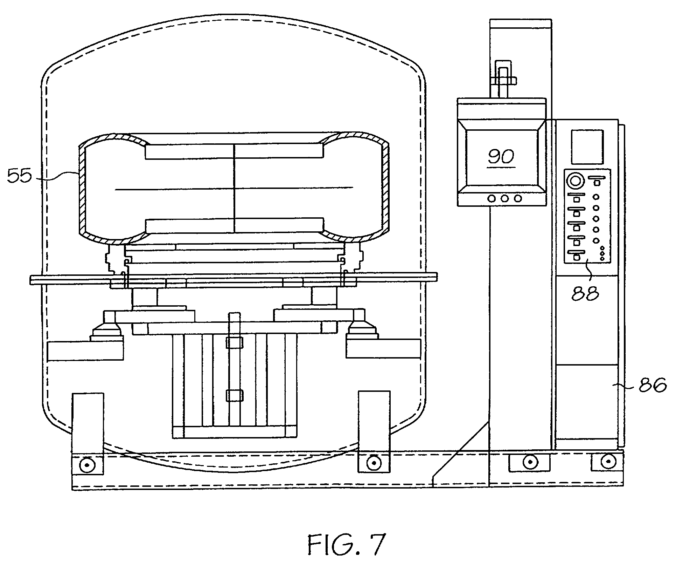

As may best be seen in FIGURE 7, with the upper dome 46 closed, the tire 48 is positioned with its axis centered over the apertures of the camera(s). The cameras are lifted to their test position. A vacuum blower 86 is connected by a hose to lower dome 56 so that when this blower is turned on, the air pressure inside the vessel is reduced. In addition, a solenoid valve is also connected to the lower dome so that when open, air is pulled into the closed vessel and out the exhaust port of the blower. When this valve is closed, the air can no longer enter the vessel to replace the interior air being pumped out causing the internal air pressure to drop. During the test cycle, usually performed in nine sections around the tire 48, the cameras test the tire in four bands, representing the upper bead, upper shoulder, lower shoulder, and lower bead. The air pressure inside the vessel and on the tire must be cycle for each test section unless, the cameras can be operated simultaneously, in which case the number of vacuum cycles is equal to the number of test sections divided by the number of cameras.

With testing during both the pressure drop and pressure increase back to ambient atmospheric pressure the cycle time can be further reduced. In fact if four cameras with 45° fields of view are placed at 90° views to each other in a frame at the center of the tire, half the tire can be tested as the pressure drops, the cameras rotate 45° and test the remaining half of the tire is tested as air is returned to the interior of the vessel. Controls 88 for the machine allow for the operator to open and close the upper dome 46, view and evaluate the various test results on areas of the tire on video monitor 90 and store the test images on a device such as an optical disk drive, hard disk drive or video printer. At the end of the test, upper dome 46 is opened, the tilt table 66 lifted to the tire load position, the tire cart 62 rolled out onto the tilt table 66 and the tilt table 66 lowered. The tire tester is then ready for the next tire.

It is to be understood, however, that even though numerous characteristics and advantages of the present invention have been set forth in the foregoing description, together with details of the structure and function of the invention, the disclosure is illustrative only, and changes may be made in detail, especially in matters of shape, size and arrangement of parts within the principles of the invention to the full extent indicated by the broad general meaning of the terms in which the appended claims are expressed.

## Claims

1. An apparatus for the nondestructive testing of a tire, comprising:
a source of coherent light directed onto a portion of a tire being tested;
a beam splitter located sufficiently near the portion of the tire being tested so that the beam splitter can receive light reflected from the portion of the tire being tested, the beam splitter comprising a partially silvered surface that is capable of transmitting a first portion of a light ray incident thereon, and reflecting a second portion of said incident light ray; and
analyzing means for comparatively analyzing said first and second portions of light from said beam splitter to produce a shearography image.

2. An apparatus according to claim 1, wherein said beam splitter comprises a partially silvered mirror.

3. An apparatus according to claim 1, further comprising tire locating means for locating a tire in a test position.

4. An apparatus according to claim 1, further comprising stressing means for stressing a tire during testing.

5. An apparatus according to claim 4, wherein said stressing means comprises means for exerting fluid pressure on a least a portion of the tire during testing.
